# EUROPEAN PATENT SPECIFICATION

(11) **EP 1 530 340 B1**
(45) Date of publication and mention of the grant of the patent: **27.02.2008**
(21) Application number: 03025826.3
(22) Date of filing: 10.11.2003
(51) Int. Cl.: H04L 29/06, H04L 12/28

(54) **Method and system for data transmission between a client and a server, wherein the client selects one out of several physical links**
Verfahren und System für die Datenübertragung zwischen einem Client und einem Server, wobei der Client eine von mehreren physikalischen Verbindungen auswählt
Procédé et système pour la transmission des données entre un client et un serveur avec le client choisissant une entre plusieures liaisons physiques

(43) Date of publication of application: 11.05.2005
(73) Proprietor: TELEFONAKTIEBOLAGET LM ERICSSON (publ), 164 83 Stockholm (SE)
(72) Inventor: Van Der Winkel, Ramon, 256 65 Helsingborg (SE)
(74) Representative: Andersson, Björn E.

(56) References cited:
- EP-A- 0 732 835
- EP-A- 1 026 916
- WO-A-01/76184

## Description

### FIELD OF INVENTION

The present invention relates to a method and system for data transmission between a server and a client. More in detail, the invention relates to a method and system comprising several physical links for said data transmission wherein the selection of physical links is optimized. The invention also relates to software for executing the method.

### BACKGROUND ART

Data transmission between various computer devices is taking place all the time. Such devices may be interconnected by a single link used for all data transmission. A common example is a cable connecting a computer device to a printer via a serial or parallel port. Various protocols for the data transfer exist.

In a system comprising a server sub-system and a client sub-system, a user in the client sub-system may want to use a service in the server sub-system. A logical channel is established for data communication in both directions.

The logical channel is embodied or transmitted by a physical link. Several logical channels may share a common physical link. A logical channel may also be transmitted using several physical links.

A physical link may be any means that is able to establish a physical connection that may transmit data between two devices. The physical link may be interfaced to the client and server in different ways.

A protocol may be used for the exchange of data between the two devices. Often, the data is gathered in packets, having a predetermined size and order of data items. Normally, a packet contains data related to one logical channel.

A transport service member in each computer device may be arranged for handling the packets of data and for the sending and the reception thereof. The transport service may comprise a multiplexer for directing the packets to and from all services in the server and users in the client that may use the actual physical links.

There is required some type of decision means for deciding on which physical link a specific data packet should be transmitted. This may be done by an algorithm that decides on which physical link the data packet should be sent. The algorithm controls the multiplexers.

The algorithm may be more or less elaborate depending on the type of physical link. One simple approach is to use the next physical link that is idle. Else, a specific data packet type is always sent on a specific physical link. Another approach is to determine the traffic intensity and to use the physical link that has the least traffic, gives the lowest cost, highest speed or lowest latency, etc. This is a static configuration.

Each physical link has a specific bandwidth, that may be constant or may be dependent on surrounding conditions. For example, a coaxial cable link has a bandwidth which is dependent on the length of the cable. A radio frequency communications adapter may have a bandwidth dependent on the transmission properties prevailing at the time of transmission.

In certain situations it is required that the response time or latency is sufficient for a given type of data transmission. This is specifically important in real-time transfer of data where the response time must be guaranteed. In order to guarantee the transmission latency, an unnecessarily high bandwidth transmission channel may be implemented. This is an expensive solution which also consumes excessive power.

In a handheld device, such as a mobile telephone or a PDA (personal digital assistant) both cost and high power consumption are negative factors.

Japanese Patent Abstract No. 2002-208934 discloses a communication system in which the header of data is provided with a field for priority and priority is placed on an event communication for communication control over a bulk communication for data transfer. In the communication between logic units, link numbers are used to indicate logical correlation. In the communication, channel numbers are used to discriminate between communication paths, thereby shortening the lengths of headers. When data is transmitted having frequency exceeding the allocated band, the priority is set to be the lowest level. When the information is divided into a plurality of data to be transmitted in the communication, an initial priority is set to be low, and a second and subsequent priorities are enhanced to continuously transmit the data. When the data is re-transmitted, the priority is enhanced.

US 2002/0186701 A1 discloses a telecommunication switching system employing multiprotocol routing optimization which utilizes predetermined and measured parameters in accordance with a set of user priorities in determining the selection of a telecommunication path to be utilized for transmitting a data file to a remote destination. Telecommunication may take place over several alternative paths such as over a high speed digital link via a T1 interface, a local area network LAN, a wide area network WAN, a telephone line or a wireless communication network. US 2002/0186701 A1 discloses the use of an algorithm for deciding the relevant path for transmission of data, depending on a number of predetermined parameters, such as maximum available bandwidth, reliability, economy, availability and security, and a number of dynamic parameters, such as operational state of a path, datasize, latency, time and available bandwidth at time of file transfer. The person using the device may customize the relative weights given to each variable and even force the algorithm to ignore certain parameters.

However, if the receiver is occupied with a task or if there are other restrictions on the receiver side, the system of US 2002/0186701 A1 is unable to resolve which is the best path for transfer of the data. Moreover, if several data transmissions should take place at the same time, the algorithm of US 2002/0186701 A1 is unable to determine the best path.

In EP 0732835 A2, there is disclosed a client server network which enables interconnetion to both the Internet and switched network. In response to a received client service request, a connection is established over the Internet between a client and a service. Client information transmitted from the client to the server over the Internet conection is used to enable the server to provide the requested service by establishing a switched network connection to the client using a client's communication number determined from the client information.

In WO 01/76184 A1, there is disclosed a method in a mobile computer, a first connection between the computer and a server being established, In the server, a user program is executed, which transmits output data for indication of the mobile computer via the first connection. The mobile computer transmits input data to the user program via the first connection, which continuously is compared to at least one second connection. The first connection is replaced by a second connection when certain conditions are met. Then henceforth input data and output data are transferred via the second connection during continued indication of output data of the mobile computer and during continued comparision with at least the first connection.

### DISCLOSURE OF INVENTION

However, in a handheld unit such as a PDA or a mobile telephone, the services of the server may be requested by different users in different circumstances. The server has no knowledge of the user of the client or the properties of the user to receive the data packets.

Consequently, the inventor has tried a new approach. The client has full knowledge over the data flow in and out to each user of the client. Thus, the client is in a good position to determine which physical link that should be used for the data transfer.

Thus, according to the invention, the client decides which physical link a server should use for transmitting a service to a user of the client. In this way, conditions at the receiver side may be taken into account for the selection of the physical link to be used for the data transfer.

When the client decides which physical link that should be used, the server may be constructed as a platform that may be used by different clients and still have the same configuration. Thus, the construction of the server can be modularized, which makes the complete system less expensive and more easily adaptable to different conditions and different clients. Moreover, the software of the server can be implemented in the same way irrespectively of how the client is embodied.

Thus, a first object of the invention is to provide a method and system for data transfer, wherein conditions at the receiver side may influence the decision on which physical link to use.

A second object of the invention is to provide a method and a system for data transfer, in which several data transmissions may take place at the same time and a transmission path is properly selected.

A third object of the invention is to provide a method and a system that makes it possible to arrange the server in a modularized manner so that the same server may be used together with clients having different constructions, requirements and software.

These objects are met by a method and system as set forth in the appended patent claims.

In a first aspect, there is provided a system for transmission of data between a client and a server over a physical link selected from a plurality of physical links, each physical link being separate and having at least one component specific for each physical link and interconnecting the client and the server. According to the invention, each physical link of said plurality of physical links being provided with an identification number sent by the client to the server via the respective physical link and stored in a memory of the server; a decision means controlled by the client for selecting at least one of said physical links for transmission of said data and a sending means of said client for sending an identification number corresponding to said physical link to said server for initiating said physical link and opening a service by the server.

The transmission of data between a client and a server may be bidirectional. Each physical link may comprise a universal asynchronous receiver-transmitter. The physical link may comprise at least one component selected from the group comprising short cables, PCB wires, a twinned-pair cable, a coaxial cable, a Bluetooth communication channel, and a serial port.

The client may comprise a processor and an associated memory, whereby the processor may be adapted to determine properties of each link and store such properties in said client memory.

Each physical link may be identical with all physical links, and may comprise a cable. In this way, the selection process between the physical links is facilitated, since they all have the same properties and may be selected arbitrarily.

The server or the client may be embodied in a device selected from the group comprising: a mobile radio terminal, a mobile telephone, a pager, a communicator, an electronic organizer, a PDA (Personal Digital Assistent), a smartphone, a computer, a multimedia player, and a MP3 player.

In a second aspect, there is provided a method for transmission of data between a client and a server over a physical link selected from a plurality of physical links, each physical link being separate and having at least one component specific for each physical link and interconnecting the client and the server. According to the invention, the method comprises that: each physical link of said plurality of physical links is provided with an identification number stored by the server; said client selecting at least one of said physical links for transmission of said data; and said client sending an identification number corresponding to said physical link to said server for initiating said physical link and opening a service by the server, whereby properties of available physical links have been determined in advance by said client and identification numbers for each physical link have been sent by the client to the server via the respective physical link and stored in a memory of said server.

The method may also comprise requesting a service from the server by a user of a client, and sending a data packet by said client to said server indicating the physical link that said service should be provided over.

In a third aspect, there is provided a method for transmission of data between a client and a server over a physical link selected from a plurality of physical links, each physical link being separate and having at least one component specific for each physical link and interconnecting the client and the server, the server receiving data from a client comprising a request for a service. According to the invention, the method comprises that: the data from the client further comprising an identification number for at least one physical link for transmission of said service; said server looking up in a memory a physical link corresponding to said identification number and selecting said physical link for transmission of said service over the physical link corresponding to said identification number, whereby properties of available physical links have been determined in advance by said client and identification numbers for each physical link have been sent by the client to the server via the respective physical link and stored in a memory of said server.

The transmission may be bidirectional. At least one of said server and said client may be embodied in a device selected from the group comprising: a mobile radio terminal, a mobile telephone, a pager, a communicator, an electronic organizer, a PDA (Personal Digital Assistent), a smartphone, a computer, a multimedia player, and a MP3 player.

In a fourth aspect, there is provided a computer program product arranged on a tangible medium for performing all of the method steps defined herein above. More specifically, the computer program product embodied on a computer readable medium, comprising computer readable instructions for carrying out all of the method steps defined herein above when run by an electronic device having digital computer capabilities.

In a fifth aspect, there is provided an electronic device having digital computer capabilities arranged to run the computer program defined herein above.

In a sixth aspect, there is provided a use of a system defined herein above in a handheld device. The handheld device may be selected from the group comprising: a mobile radio terminal, a mobile telephone, a pager, a communicator, an electronic organizer, a PDA (Personal Digital Assistent), a smartphone, a computer, a multimedia player, and a MP3 player.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

Further objects, features and advantages of the invention will appear from the detailed description of embodiments given below with reference to the accompanying drawings in which:
Fig. 1 is a schematic view of a mobile telephone in which the present invention may be used;
Fig. 2 is a schematic view of the mobile telephone of Fig. 1, wherein the concept of server and client is exemplified;
Fig. 3 is a schematic block scheme over a system according to the present invention;
Fig. 4 is a schematic block scheme over an alternative system according to the present invention;
Fig. 5 is a flow scheme of an initiation method for the setup of the system of the invention.
Fig. 6 is a flow scheme of a selection method for the system of the invention.

### DETAILED DESCRIPTION OF EMBODIMENTS

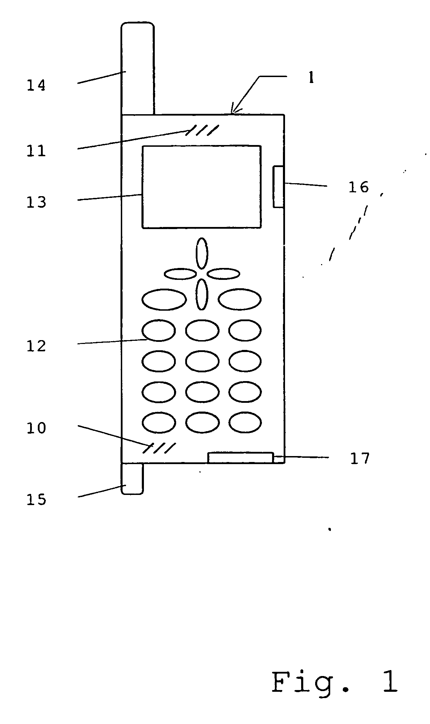

Fig. 1 discloses a mobile terminal 1 comprising a man machine interface for operating the terminal. The man machine interface may comprise a microphone 10, a loudspeaker or an earphone 11, a keypad 12, and a display 13. Furthermore, the mobile terminal 1 may comprise communication means for communicating with a network and with other electronic equipment, such as a computer, a personal digital assistant, a communicator, an external multimedia player, such as a MP3 player, a PDA or a smartphone. The communication means may comprise a first antenna 14 for communicating with a communication network, such as a telecommunication network according to e.g. the GSM/GPRS, the UMTS, such as according to EDGE or WCDMA technology, or the cdma2000 standard, over a wireless communication link. The mobile terminal may also comprise a short-range supplementary antenna 15 for communicating with a wireless local area network, such as according to Bluetooth^{®} technology, or a means 16 for establishing an infrared (IR) connection with another electronic device. The antennas may be external as shown or arranged inside the cover invisible from the outside. The mobile terminal 1 may also comprise an accessory connector 17, to which an external device, such as an MP3 player or a digital camera, may be connected either directly or through a serial cable. The communication means also comprises various circuitries for communication using communication interfaces, such as modulators, demodulators, amplifiers, transmitters, receivers, etc.

Reference is made to a mobile terminal or mobile telephone 1 in the following. However, the invention is not limited to a mobile terminal, but can be incorporated into any electronic equipment. Such electronic equipment may comprise a mobile radio terminal, a mobile telephone, a pager, a communicator, an electronic organizer, a PDA (Personal Digital Assistent), a smartphone, a computer, or a multimedia player, such as a MP3 player. Such equipment may be handheld devices.

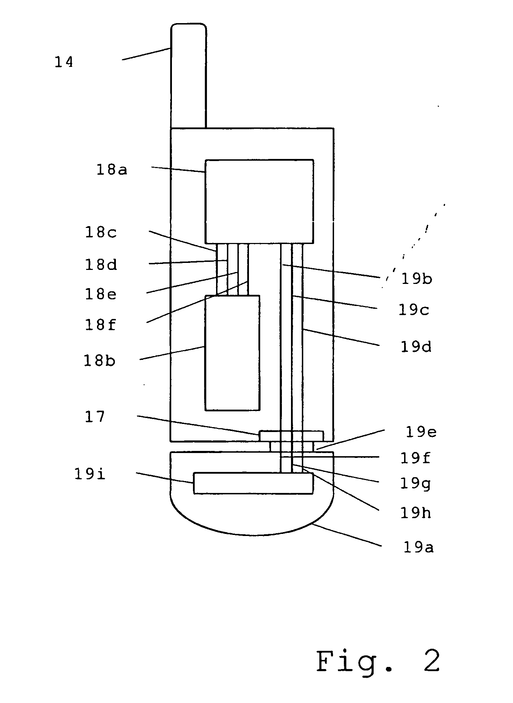

The mobile telephone of Fig. 1 may comprise a main processing unit 18a as shown in Fig. 2. The processing unit 18a may be connected to an ASIC 18b via several physical links 18c, 18d, 18e, 18f. Furthermore, the processing unit 18a may be connected to the accessory connector 17 via three physical links 19b, 19c, 19d. An add-on device 19a may be connected to the accessory connector 17 via a connector 19e and three physical links 19f, 19g, 19h that connects to a processing unit 19i in the add-on device 19a.

In the mobile telephone shown in Fig. 2, the processing unit 18a may be a server delivering services to ASIC 18b and add-on device 19a. Such services may be SMS. Thus, ASIC 18b and add-on device 19a are clients.

Moreover, ASIC 18b may be a server, for example a video ASIC connected to an integrated video sensor chip for providing images. Processing unit 18a is then a client requesting services from ASIC 18b.

The same is true for add-on device 19a, that may be a memory comprising MP3 files that should be played by the processing unit 18a. In this case add-on device 19a is a server and the processing unit 18a is a client.

There may be several clients connected to the same server and a client may be connected to several servers.

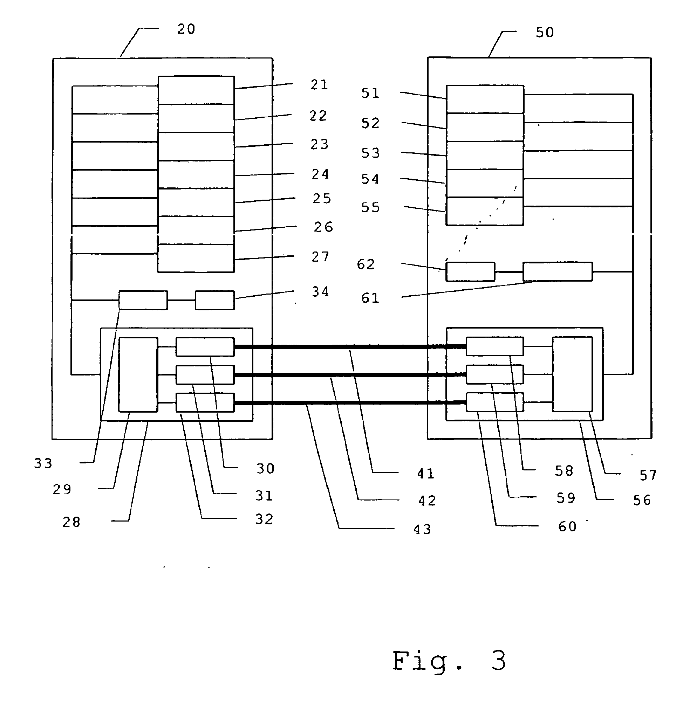

Fig. 3 is a schematic block diagram of a system according to the invention. The system comprises a server 20 and a client 50 interconnected by several physical links, three links 41, 42, 43 being shown in Fig. 3.

The server 20 comprises several services 21, 22, 23, 24, 25, 26, 27, each connected to a transport service unit 28. The transport service unit 28 comprises a multiplexer 29, which may be embodied in software, and three UART 30, 31, 32 each connected to a physical link 41, 42, 43. The services 21 to 27 may comprise services such as: message services such as SMS (short message service), EMS (enhanced message service), MMS (multimedia messaging systems); file system access, such as MP3 files or image files; call control services; data services for example related to background services, such as checking for new e-mails; simple control signaling, such as volume control settings, LED control, vibrator control; camera control; Video Telephony; Dial-up Networking, etc. Moreover, the server comprises a processor 33 and an associated memory 34.

The client 50 comprises several users 51, 52, 53, 54, 55 each connected to a transport service unit 56. The transport service unit 56 comprises a multiplexer 57 and three UART 58, 59, 60 each connected to a physical link 41, 42, 43. Moreover, the client comprises a processor 61 and an associated memory 62.

In handheld devices, such as a mobile telephone or a PDA, the server may comprise the main processor 18a of the telephone or the PDA that normally executes applications, which may be services.

However, add-on units, such as a digital camera or a global positioning system unit, normally includes a processor that executes applications on the add-on unit. The processor of the add-on unit may want to communicate with the processor of the handheld device.

More generally, application chips may be included in the handheld devices. Such application chips may want to be able to use the services of the handheld device. Examples of such application chips are an MP3-player or a Video Telephone unit. Moreover, the handheld device may include one or several ASIC 18b for performing specific tasks, such as receiving and conditioning data from a video sensor chip. Such an ASIC may comprise a processor that wants to take advantage of the service executing on the main processor of the handheld device.

Such add-on units, application chips and ASIC may be clients in the sense of the present invention. The applications that are executed by the processor of the clients may be users in the sense of the present invention. Generally, any application or software that requests a service is a user.

The application that constitutes a user may be initiated automatically, for example at power-up or at regular time intervals, or may be initiated by a person using the device. The application may also be initiated by external devices, for example a light sensor indicating that the device is exposed to light.

The multiplexer of the server and/or the client may be implemented in software and/or hardware.

A physical link is any means able to transmit data from one device to another device. By a physical link is meant a link that includes at least one component that is physically separate from a component of another physical link. For example, each link 41, 42, 43 includes a server UART 30, 31, 32, a cable 41, 42, 43 and a client UART 58, 59, 60. These three components are physically separate for each physical link. However, the three physical links share a multiplexer at each end.

The physical link may be any one of: short cables, PCB wires, a coaxial cable, a twinned-pair cable, a Bluetooth communication channel, a serial port, etc. The physical link may also be a high-speed digital link.

Each physical link has properties that are specific for this physical link and are not influenced by properties of other physical links. One example is that the bandwidth is separate for each physical link. Each physical link may also have properties that are influenced by other physical links, such as the speed of the multiplexer.

The physical link may be interfaced to the respective devices, server and client, in different manners, such as by a universal asynchronous receiver-transmitter UART as shown in the drawings. Other types of interfaces works equally well, such SPI (Serial Peripheral Interface), I²S, I²C, etc.

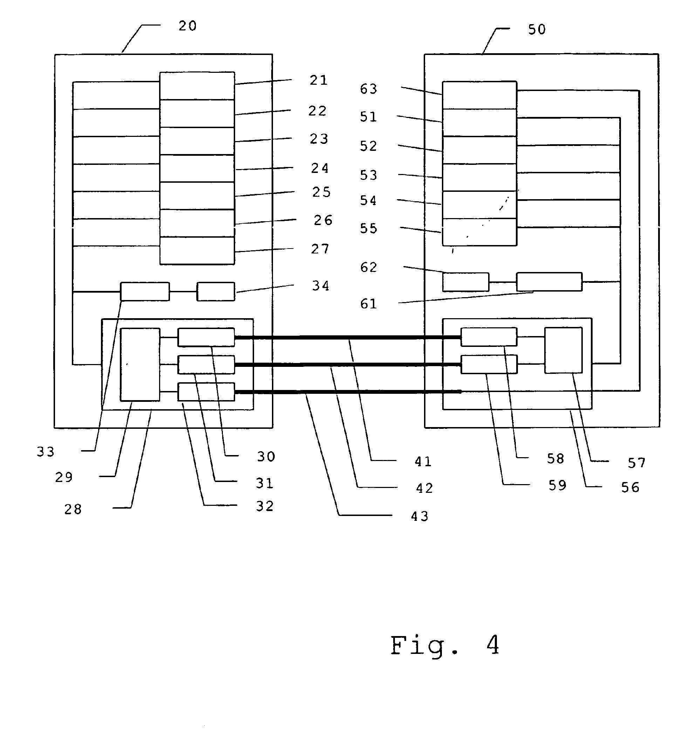

Fig. 4 discloses an alternative system according to the invention. The same reference numbers have been used for the same components as in Fig. 3. The server is arranged in the same manner as in Fig. 3. However, the client has another user 63, that is directly connected to physical link 43. Such a user may be a video telephone user that always needs maximum bandwidth and thus is hardware dedicated to the third physical link 43. Moreover, the multiplexer 57 cannot connect to the third physical link 43. Application 63 may include a UART for communication with UART 31 of the server. Thus, data packet reception may take place as fast as possible with minimum latency and more or less independently of the other users of the client.

In the prior art, normally the server decided over which physical link data related to the service should be transmitted. However, the server normally does not know the maximum latency that is acceptable by a user for a given service. Thus, the server is unable to decide how to distribute the data from the different services that have been activated by the user(-s) over the available physical links.

The solution to the problem is to allow the user or the client to determine over which physical link data packets relevant for a specific service requested from the server should be transmitted. The client can then reconfigure the transmission links if it is concluded that the latency is unacceptable. Thus, at least part of the operation of the server is controlled by the user. The user requests the physical link(-s) for transmission.

Thus, SMS and IP data related to background operations could share the same physical link, since such data has a relative low bandwidth requirement. Such background operations may be checking for new e-mails or a command for control of the volume of an audio output.

However, a streaming session showing a video clip and a second IP data connection to download an MP3-file might not be able to share a single physical link, since the quality of the video stream may be affected by the long IP packets of the MP3-file. A video telephony data stream would normally need to be placed on a separate physical link.

It is mentioned that the data transfer between the server and client may be bidirectional, although the main data transfer may be from the server to the client.

In order for the client to be able to indicate which physical link that should be used, an identification of each link has to be established. According to the invention, the client numbers each physical link by initially sending a data packet to the server via each of the physical links. Each packet contains a unique identification number that the client will use to identify the physical link at a later stage. The server puts these identification numbers in a memory 34 for subsequent use.

When requesting a service, the client indicates on which physical link(-s) all the data packets with data for this service should be put on by referring to the identification number.

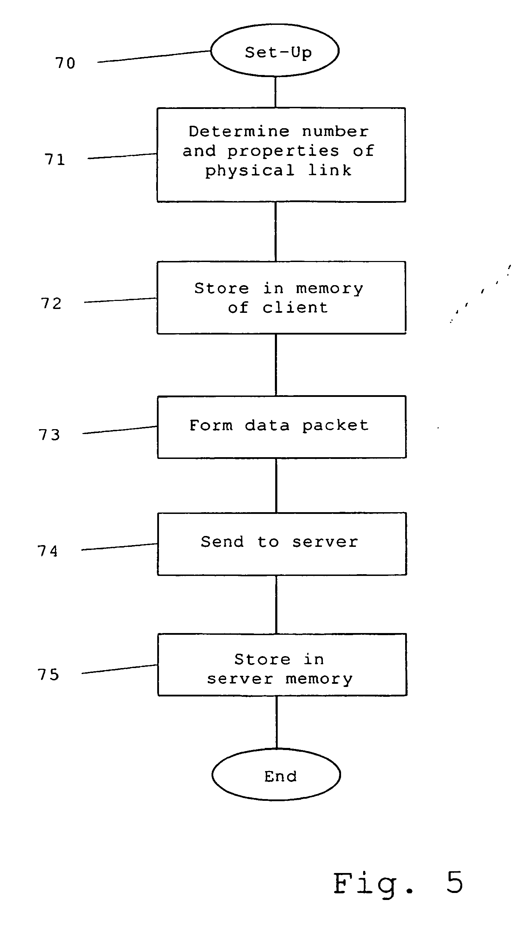

A method indicated in Fig. 5 may be used at the setup of the system. If the client and server are hardware connected without removal possibilities, such as by PCB wires, such setup method may be performed at the initial start up of the system. The identification numbers may then be stored in a parameter memory of the server and the client. However, if the client is removably connected to the server, such as by connectors 17, 19e, the method is performed each time the client is connected.

As indicated in Fig. 5, at the setup 70 of the system, the client determines in step 71 how many physical links that are present and properties for such links. This data is stored in step 72 in a memory 62 of the client. In step 73, the client forms a data packet for each physical link. Each data packet contains a unique identification number that the client will use to identify the physical link. The data packets are sent to the server in step 74 on each physical link. The server receives such data packets and extracts the identification numbers and relates them to each physical link and stores them in step 75 in a memory 34 of the server.

The properties to be determined in step 71 may include one or several of the following properties: type of link, maximum available bandwidth, reliability, economy, availability, and security.

The properties may be determined by electronic circuitry in the client or by software in the client. For example, the latency of the physical link may be determined via a "ping" action, well known to the skilled person.

The properties of the physical links may alternatively be entered into the system via input means, such as a keyboard, a touch-sensitive pad, or a mouse device, or be included in the software of the user application.

It is mentioned that the system may include physical links that are normally non-active. Such surplus physical links may be normally deactivated for saving power. Such surplus physical links may be activated if they are needed.

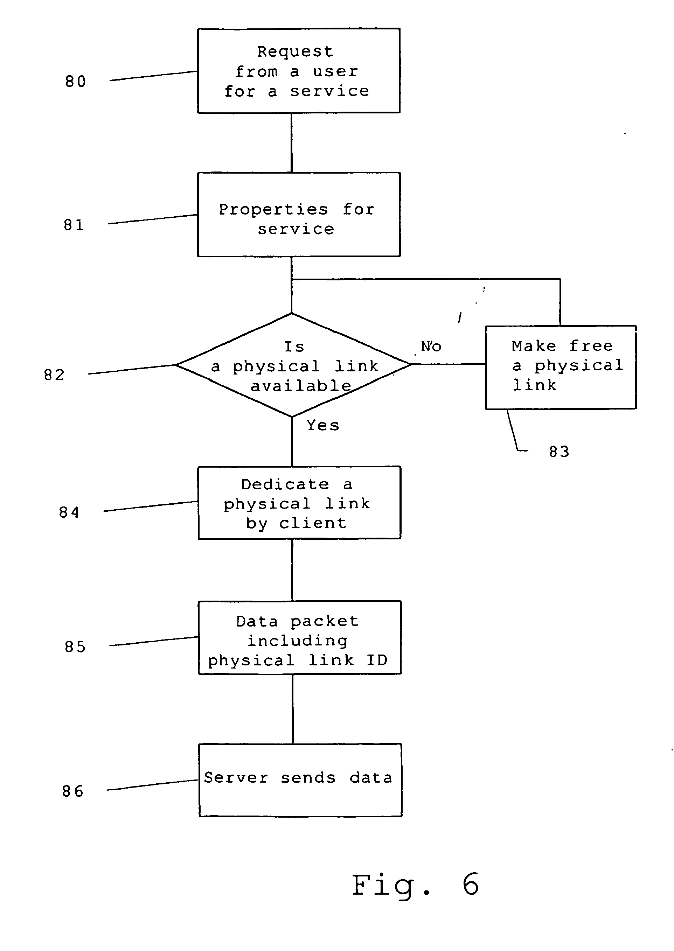

The use of the system is exemplified in the flow scheme of Fig. 6. The start 80 may be a request from a user in the client to access a specific service in the server. The client processor determines in step 81 the required properties for the service. If the service is a video telephone service, a dedicated physical link with high bandwidth or a dedicated physical link may be required while a SMS service may be performed on almost any physical link and may also share a physical link with other services.

In step 82, the system determines if a physical link with the desired properties is available. If yes, that physical link is dedicated to the service for the user. If no, in step 83, the client processor tries to free up a physical link by any means, such as combining concurrent activities, or opening of a new surplus link that has been non-active, or moving a service to another physical link. The action then returns from step 83 to before step 82.

In step 84 a specific physical link having an identification number is dedicated to the requested service. The client processor in step 85 forms a data packet including the physical link identification number and a request for a specific service over the dedicated physical link. The data packet is sent to the server.

In step 86, the server responds to said request by looking up the relevant physical link in its memory and establishing a communication path from said service to said physical link.

Herein above, the invention has been described with reference to several specific embodiments shown on the drawings. A skilled person may become aware of other means and combinations that occur to him reading the specification. Such combinations are intended to be included within the scope of the invention. The invention is only limited by the appended patent claims.

## Claims

1. A system for transmission of data between a client and a server over a physical link selected from a plurality of physical links, each physical link being separate and having at least one component specific for each physical link and interconnecting the client and the server, **characterized by**
each physical link of said plurality of physical links (41,42,43) being provided with an identification number sent by the client to the server via the respective physical link and stored in a memory (34) of the server (20);
a decision means (61) controlled by the client(50) for selecting at least one of said physical links for transmission of said data; and
a sending means (56) of said client for sending an identification number corresponding to said physical link to said server for initiating said physical link and opening a service by the server.

2. The system of claim 1, **characterized in that** said transmission of data between a client and a server is bidirectional.

3. The system of claim 1, **characterized in that** said physical link (41,42,43) comprises a universal asynchronous receiver-transmitter (58,59,60).

4. The system of claim 1, 2 or 3, **characterized in that** said physical link (41,42,43) comprises at least one component selected from the group comprising short cables, PCB wires, a twinned-pair cable, a coaxial cable, a Bluetooth communication channel, and a serial port.

5. The system of any one of the previous claims, **characterized in that** said client (50) comprises a processor (61) and an associated memory (62), whereby the processor is adapted to determine properties of each link and store such properties in said client memory (62).

6. The system of any one of the previous claims, **characterized in that** each physical link (41,42,43) is identical with all physical links.

7. The system of claim 6, **characterized in that** each physical link (41,42,43) comprises a cable.

8. The system of any one of the previous claims, **characterized in that** at least one of said server (20) and said client (50) is embodied in a device selected from the group comprising: a mobile radio terminal, a mobile telephone, a pager, a communicator, an electronic organizer, a PDA (Personal Digital Assistent), a smartphone, a computer, a multimedia player, and a MP3 player.

9. A method for transmission of data between a client and a server over a physical link selected from a plurality of physical links, each physical link being separate and having at least one component specific for each physical link and interconnecting the client and the server, **characterized by**
each physical link of said plurality of physical links (41,42,43) being provided with an identification number stored by the server (20);
said client (50) selecting at least one of said physical links (41,42,43) for transmission of said data; and
said client (50) sending an identification number corresponding to said physical link to said server (20) for initiating said physical link and opening a service by the server,
whereby properties of available physical links (41,42,43) have been determined in advance by said client and identification numbers for each physical link have been sent by the client to the server via the respective physical link and stored in a memory (34) of said server (20) .

10. The method of claim 9, **characterized by**
requesting a service from the server (20) by a user of a client (50), and
sending a data packet by said client to said server indicating the physical link (41,42,43) that said service should be provided over.

11. A method for transmission of data between a client and a server over a physical link selected from a plurality of physical links, each physical link being separate and having at least one component specific for each physical link and interconnecting the client and the server, the server (20) receiving data from a client (50) comprising a request for a service, **characterized by**
the data from the client (50) further comprising an identification number for at least one physical link for transmission of said service;
said server (20) looking up in a memory (34) a physical link (41,42,43) corresponding to said identification number and selecting said physical link for transmission of said service over the physical link corresponding to said identification number,
whereby properties of available physical links (41,42,43) have been determined in advance by said client and identification numbers for each physical link have been sent by the client to the server via the respective physical link and stored in a memory (34) of said server (20) .

12. The method of any one of claims 9 to 11, **characterized in that** said transmission is bidirectional.

13. The method of any one of claims 9 to 12, **characterized in that** at least one of said server (20) and said client (50) is embodied in a device selected from the group comprising: a mobile radio terminal, a mobile telephone, a pager, a communicator, an electronic organizer, a PDA (Personal Digital Assistent), a smartphone, a computer, a multimedia player, and a MP3 player.

14. A computer program product arranged on a tangible medium for performing all of the method steps defined in any one of claims 9 to 13 when run on a computer.

15. The computer program product embodied on a computer readable medium according to claim 14, comprising computer readable instructions for carrying out all of the method steps according to any one of the claims 9 to 13 when run by an electronic device having digital computer capabilities.

16. An electronic device having digital computer capabilities arranged to run the computer program according to claim 14 or 15.

17. Use of a system according to any one of claims 1 to 8 in a handheld device (1).

18. The use of claim 17, in which the handheld device is selected from the group comprising: a mobile radio terminal, a mobile telephone, a pager, a communicator, an electronic organizer, a PDA (Personal Digital Assistent), a smartphone, a computer, a multimedia player, and a MP3 player.

## Patentansprüche

1. Ein System für eine Übertragung von Daten zwischen einem Client und einem Server über eine physikalische Verbindung, die aus einer Mehrzahl von physikalischen Verbindungen ausgewählt ist, wobei jede physikalische Verbindung getrennt ist und mindestens eine Komponente hat, die für jede physikalische Verbindung spezifisch ist, und die den Client und den Server miteinander verbindet, **gekennzeichnet durch**
eine Identifikationsnummer, mit der jede physikalische Verbindung der Mehrzahl von physikalischen Verbindungen (41, 42, 43) versehen ist, die **durch** den Client über die jeweilige physikalische Verbindung zu dem Server gesendet und in einem Speicher (34) des Servers (20) gespeichert wird;
eine Entscheidungseinrichtung (61), die **durch** den Client (50) gesteuert wird, zum Auswählen von mindestens einer der physikalischen Verbindungen für die Übertragung der Daten; und
eine Sendeeinrichtung (56) des Clients zum Senden einer Identifikationsnummer, die der physikalischen Verbindung entspricht, zu dem Server zum Einleiten der physikalischen Verbindung und Öffnen eines Dienstes durch den Server.

2. System nach Anspruch 1, **dadurch gekennzeichnet, dass** die Übertragung von Daten zwischen einem Client und einem Server bidirektional ist.

3. System nach Anspruch 1, **dadurch gekennzeichnet, dass** die physikalische Verbindung (41, 42, 43) einen universellen asynchronen Empfänger-Sender (58, 59, 60) aufweist.

4. System nach Anspruch 1, 2 oder 3, **dadurch gekennzeichnet, dass** die physikalische Verbindung (41, 42, 43) mindestens eine Komponente aufweist, die aus der Gruppe, die kurze Kabel, PCB-Drähte, ein Zwillingspaarkabel, ein Koaxialkabel, einen Bluetooth-Kommunikationskanal und einen seriellen Anschluss aufweist, ausgewählt ist.

5. System nach einem der vorhergehenden Ansprüche, **dadurch gekennzeichnet, dass** der Client (50) einen Prozessor (61) und einen zugeordneten Speicher (62) aufweist, wobei der Prozessor angepasst ist, um Eigenschaften jeder Verbindung zu bestimmen und solche Eigenschaften in dem Speicher (62) des Clients zu speichern.

6. System nach einem der vorhergehenden Ansprüche, **dadurch gekennzeichnet, dass** jede physikalische Verbindung (41, 42, 43) mit allen physikalischen Verbindungen identisch ist.

7. System nach Anspruch 6, **dadurch gekennzeichnet, dass** jede physikalische Verbindung (41, 42, 43) ein Kabel aufweist.

8. System nach einem der vorhergehenden Ansprüche, **dadurch gekennzeichnet, dass** mindestens entweder der Server (20) oder der Client (50) in einer Vorrichtung verkörpert ist, die aus der Gruppe ausgewählt ist, die ein Mobilfunkendgerät, ein Mobiltelefon, einen Funkrufempfänger, ein Kommunikationsgerät, einen elektronischen Organizer, einen PDA (Persönlichen Digitalen Assistenten), ein intelligentes Telefon, einen Computer, einen Multimedia-Spieler und einen MP3-Spieler aufweist.

9. Verfahren zur Übertragung von Daten zwischen einem Client und einem Server über eine physikalische Verbindung, die aus einer Mehrzahl von physikalischen Verbindungen ausgewählt ist, wobei jede physikalische Verbindung getrennt ist und mindestens eine Komponente hat, die für jede physikalische Verbindung spezifisch ist, und die den Client und den Server miteinander verbindet, **gekennzeichnet durch**
eine Identifikationsnummer, mit der jede physikalische Verbindung der Mehrzahl von physikalischen Verbindungen (41, 42, 43) versehen ist, die **durch** den Server (20) gespeichert wird;
Auswählen von mindestens einer der physikalischen Verbindungen (41, 42, 43) für eine Übertragung der Daten durch den Client (50); und
Senden einer Identifikationsnummer, die der physikalischen Verbindung entspricht, zu dem Server (20) durch den Client (50) zum Einleiten der physikalischen Verbindung und Öffnen eines Dienstes **durch** den Server,
wobei Eigenschaften verfügbarer physikalischer Verbindungen (41, 42, 43) im Voraus **durch** den Client bestimmt wurden und Identifikationsnummern für jede physikalische Verbindung **durch** den Client über die jeweilige physikalische Verbindung zu dem Server gesendet und in einem Speicher (34) des Servers (20) gespeichert wurden.

10. Verfahren nach Anspruch 9, **gekennzeichnet durch** Anfragen eines Dienstes von dem Server (20) **durch** einen Benutzer eines Clients (50), und Senden eines Datenpaketes **durch** den Client zu dem Server, das die physikalische Verbindung (41, 42, 43), über die der Dienst bereitgestellt werden sollte, anzeigt.

11. Verfahren zur Übertragung von Daten zwischen einem Client und einem Server über eine physikalische Verbindung, die aus einer Mehrzahl von physikalischen Verbindungen ausgewählt ist, wobei jede physikalische Verbindung getrennt ist und mindestens eine Komponente hat, die für jede physikalische Verbindung spezifisch ist, und die den Client und den Server miteinander verbindet, wobei der Server (20) Daten von einem Client (50) empfängt, die eine Anfrage für einen Dienst aufweisen, **gekennzeichnet durch**
ferner eine Identifikationsnummer für mindestens eine physikalische Verbindung zur Übertragung des Dienstes, die die Daten von dem Client (50) aufweisen; Nachschlagen in einem Speicher (34) einer physikalischen Verbindung (41, 42, 43), die der Identifikationsnummer entspricht, und Auswählen der physikalischen Verbindung zur Übertragung des Dienstes über die physikalische Verbindung, die der Identifikationsnummer entspricht, **durch** den Server (20),
wobei Eigenschaften physikalischer Verbindungen (41, 42, 43) im Voraus **durch** den Client bestimmt wurden und Identifikationsnummern für jede physikalische Verbindung **durch** den Client über die jeweilige physikalische Verbindung zu dem Server gesendet und in einem Speicher (34) des Servers (20) gespeichert wurden.

12. Verfahren nach einem der Ansprüche 9 bis 11, **dadurch gekennzeichnet, dass** die Übertragung bidirektional ist.

13. Verfahren nach einem der Ansprüche 9 bis 12, **dadurch gekennzeichnet, dass** mindestens entweder der Server (20) oder der Client (50) in einer Vorrichtung verkörpert ist, die aus der Gruppe ausgewählt ist, die ein Mobilfunkendgerät, ein Mobiltelefon, einen Funkrufempfänger, ein Kommunikationsgerät, einen elektronischen Organizer, einen PDA (Persönlichen Digitalen Assistenten), ein intelligentes Telefon, einen Computer, einen Multimedia-Spieler und einen MP3-Spieler aufweist.

14. Computerprogramm-Erzeugnis, das auf einem greifbaren Medium angeordnet ist, zum Durchführen aller Verfahrensschritte, die in einem der Ansprüche 9 bis 13 definiert sind, wenn dasselbe auf einem Computer laufen gelassen wird.

15. Computerprogramm-Erzeugnis, das auf einem computerlesbaren Medium verkörpert ist, gemäß Anspruch 14, mit computerlesbaren Anweisungen zum Ausführen aller Verfahrensschritte gemäß einem der Ansprüche 9 bis 13, wenn dasselbe durch eine elektronische Vorrichtung, die Fähigkeiten eines digitalen Computers hat, laufen gelassen wird.

16. Elektronische Vorrichtung, die Fähigkeiten eines digitalen Computers hat und angeordnet ist, um das Computerprogramm gemäß Anspruch 14 oder 15 laufen zu lassen.

17. Verwendung eines Systems gemäß einem der Ansprüche 1 bis 8 in einer tragbaren Vorrichtung (1).

18. Verwendung nach Anspruch 17, bei der die tragbare Vorrichtung aus der Gruppe ausgewählt ist, die ein Mobilfunkendgerät, ein Mobiltelefon, einen Funkrufempfänger, ein Kommunikationsgerät, einen elektronischen Organizer, einen PDA (Persönlichen Digitalen Assistenten), ein intelligentes Telefon, einen Computer, einen Multimedia-Spieler und einen MP3-Spieler aufweist.

## Revendications

1. Système pour la transmission de données entre un client et un serveur sur un lien physique sélectionné parmi une multiplicité de liens physiques, chaque lien physique étant séparé et ayant au moins un composant spécifique à chaque lien physique et interconnectant le client et le serveur, **caractérisé par**
**le fait que** chaque lien physique de la multiplicité de liens physiques (41, 42, 43) comporte un numéro d'identification envoyé par le client au serveur par l'intermédiaire du lien physique respectif et stocké dans une mémoire (34) du serveur (20) ;
un moyen de décision (61) commandé par le client (50) pour sélectionner au moins un des liens physiques pour la transmission desdites données ; et
un moyen d'envoi (56) du client pour envoyer au serveur un numéro d'identification correspondant audit lien physique, pour mettre en fonction ledit lien physique et ouvrir un service par le serveur.

2. Système selon la revendication 1, **caractérisé en ce que** la transmission de données entre un client et un serveur est bidirectionnelle.

3. Système selon la revendication 1, **caractérisé en ce que** le lien physique (41, 42, 43) comprend un émetteur - récepteur asynchrone universel (58, 59, 60).

4. Système selon la revendication 1, 2 ou 3, **caractérisé en ce que** le lien physique (41, 42, 43) comprend au moins un composant sélectionné dans le groupe comprenant des câbles courts, des pistes de circuit imprimé, un câble à paire torsadée, un câble coaxial, un canal de communication Bluetooth et un port série.

5. Système selon l'une quelconque des revendications précédentes, **caractérisé en ce que** ledit client (50) comprend un processeur (61) et une mémoire associée (62), le processeur étant adapté pour déterminer des propriétés de chaque lien et pour stocker de telles propriétés dans la mémoire (62) du client.

6. Système selon l'une quelconque des revendications précédentes, **caractérisé en ce que** chaque lien physique (41, 42, 43) est identique à tous les liens physiques.

7. Système selon la revendication 6, **caractérisé en ce que** chaque lien physique (41, 42, 43) comprend un câble.

8. Système selon l'une quelconque des revendications précédentes, **caractérisé en ce qu'**au moins un dudit serveur (20) et dudit client (50) est incorporé dans un dispositif sélectionné dans le groupe comprenant : un terminal radio mobile, un téléphone mobile, un radiomessageur, un communicateur, un organiseur électronique, un assistant numérique personnel ou PDA ("Personal Digital Assistant"), un téléphone intelligent, un ordinateur, un lecteur multimédia et un lecteur MP3.

9. Procédé pour la transmission de données entre un client et un serveur sur un lien physique sélectionné parmi une multiplicité de liens physiques, chaque lien physique étant séparé et ayant au moins un composant spécifique à chaque lien physique et interconnectant le client et le serveur, **caractérisé en ce que**
chaque lien physique de la multiplicité de liens physiques (41, 42, 43) comporte un numéro d'identification stocké par le serveur (20) ;
le client (50) sélectionne au moins un des liens physiques (41, 42, 43) pour la transmission desdites données ; et
le client (50) envoie au serveur (20) un numéro d'identification correspondant audit lien physique, pour mettre en fonction le lien physique et ouvrir un service par le serveur,
grâce à quoi des propriétés de liens physiques (41, 42, 43) disponibles ont été déterminées à l'avance par le client et des numéros d'identification pour chaque lien physique ont été envoyés par le client au serveur par l'intermédiaire du lien physique respectif et stockés dans une mémoire (34) du serveur (20).

10. Procédé selon la revendication 9, **caractérisé en ce que**
un utilisateur d'un client (50) demande un service de la part du serveur (20), et
le client envoie au serveur un paquet de données indiquant le lien physique (41, 42, 43) sur lequel ledit service doit être fourni.

11. Procédé pour la transmission de données entre un client et un serveur sur un lien physique sélectionné parmi une multiplicité de liens physiques, chaque lien physique étant séparé et ayant au moins un composant spécifique à chaque lien physique et interconnectant le client et le serveur, le serveur (20) recevant à partir d'un client (50) des données comprenant une demande d'un service, **caractérisé en ce que**
les données provenant du client (50) comprennent en outre un numéro d'identification pour au moins un lien physique, pour la transmission dudit service ;
le serveur (20) recherche dans une mémoire (34) un lien physique (41, 42, 43) correspondant audit numéro d'identification et sélectionne ce lien physique pour la transmission du service sur le lien physique correspondant audit numéro d'identification,
grâce à quoi des propriétés de liens physiques (41, 42, 43) disponibles ont été déterminées à l'avance par le client et des numéros d'identification pour chaque lien physique ont été envoyés par le client au serveur par l'intermédiaire du lien physique respectif et ont été stockés dans une mémoire (34) du serveur (20).

12. Procédé selon l'une quelconque des revendications 9 à 11, **caractérisé en ce que** ladite transmission est bidirectionnelle.

13. Procédé selon l'une quelconque des revendications 9 à 12, **caractérisé en ce qu'**au moins un dudit serveur (20) et dudit client (50) est incorporé dans un dispositif sélectionné dans le groupe comprenant : un terminal radio mobile, un téléphone mobile, un radiomessageur, un communicateur, un organiseur électronique, un assistant numérique personnel ou PDA ("Personal Digital Assistant"), un téléphone intelligent, un ordinateur, un lecteur multimédia et un lecteur MP3.

14. Produit programme informatique installé sur un support tangible pour accomplir toutes les étapes de procédé définies dans l'une quelconque des revendications 9 à 13, lorsqu'il est exécuté sur un ordinateur.

15. Produit programme informatique incorporé dans un support lisible par ordinateur selon la revendication 14, comprenant des instructions lisibles par ordinateur pour accomplir toutes les étapes de procédé conformes à l'une quelconque des revendications 9 à 13, lorsqu'il est exécuté par un dispositif électronique ayant des capacités de calculateur numérique.

16. Dispositif électronique ayant des capacités de calculateur numérique agencé pour exécuter le programme informatique selon la revendication 14 ou 15.

17. Utilisation d'un système selon l'une quelconque des revendications 1 à 8 dans un dispositif de poche (1).

18. Utilisation selon la revendication 17, dans laquelle le dispositif de poche est sélectionné dans le groupe comprenant : un terminal radio mobile, un téléphone mobile, un radiomessageur, un communicateur, un organiseur électronique, un assistant numérique personnel ou PDA ("Personal Digital Assistant"), un téléphone intelligent, un ordinateur, un lecteur multimédia et un lecteur MP3.
